**Europäisches Patentamt**

**European Patent Office**

**Office européen des brevets**

(19)

(11) Veröffentlichungsnummer : **0 217 077
B1**

(12)　　　　　　　　**EUROPÄISCHE PATENTSCHRIFT**

(45) Veröffentlichungstag der Patentschrift :
23.11.89

(21) Anmeldenummer : 86110905.6

(22) Anmeldetag : 07.08.86

(51) Int. Cl.⁴ : **B 23 K 26/04**, G 02 B　7/24

(54) Einrichtung zur Lagekorrektur eines über eine Gelenkoptik geführten Laserstrahls.

(30) Priorität : 23.08.85 DE 3530189

(43) Veröffentlichungstag der Anmeldung :
08.04.87 Patentblatt 87/15

(45) Bekanntmachung des Hinweises auf die Patenterteilung : 23.11.89 Patentblatt 89/47

(84) Benannte Vertragsstaaten :
CH DE FR GB LI SE

(56) Entgegenhaltungen :
EP--A-- 0 154 865
EP--A-- 0 154 866
DE--A-- 2 713 737
DE--A-- 3 202 432
GB--A-- 1 284 809
US--A-- 3 902 036
US--A-- 4 129 775

(73) Patentinhaber : **Firma Carl Zeiss
D-7920 Heidenheim (Brenz) (DE)
CH DE FR LI SE
CARL-ZEISS-STIFTUNG trading as CARL ZEISS**

**D-7920 Heidenheim (Brenz) (DE)
GB**

(72) Erfinder : **Hohberg, Gerhard, Dr.
Kopernikusstrasse 34
D-7082 Oberkochen (DE)**

## Beschreibung

Zur Führung von Laserstrahlen verwendet man entweder Lichtleiter in Form von flexiblen Glasfasern oder Übertragungssysteme, die ablenkende Optik, in der Regel Spiegel, enthalten. Insbesondere für medizinische Anwendungsfälle wie z. B. die Laserchirurgie werden oft gelenkige Übertragungssysteme des letztgenannten Typs eingesetzt, da es bisher keine Faserkabel gibt, die genügend bruchsicher sind und gleichzeitig im Wellenlängenbereich der dort meist verwendeten $CO_2$-Laser ausreichend verlustarm übertragen.

Die zur Führung des Lasers benutzten Gelenkarme bestehen aus einer Reihe von Umlenkspiegeln, die an Drehgelenken derart befestigt sind, daß jeder Spiegel mitsamt dem darauffolgenden Teil des Gelenkarms um die Achse des jeweils einfallenden Laserstrahls drehbar ist. Zusätzlich sind zwischen den Gelenken oft Teleskopführungen eingesetzt, die es erlauben die Länge des Arms zu verändern. Bekannte Gelenkarme besitzen bis zu sieben Drehgelenke.

Die einwandfreie Funktion eines solchen Gelenkarms hängt abgesehen von einer genügend genauen Justage der Spiegel von der Qualität der Drehlager bzw. Teleskopführungen sowie der Steifigkeit ihrer Verbindungen ab. Die dabei auftretenden Probleme wachsen mit den Abmessungen des vom Gelenkarm überstreichbaren Arbeitsbereiches. Die Erhöhung der Steifigkeit des Arms erfordert stärkeres Material und demzufolge größere zu bewegende Massen, was die Drehlager stärker belastet und vor allem im dynamischen Betrieb die Handhabung beeinträchtigt.

Treten jedoch Führungsfehler auf, dann wandert der Strahl aus. In erster Linie verlagert sich dabei der Fokus des Lasers, was in gewissen Grenzen insbesondere, wenn die Fokuslage über einen eingespiegelten Pilotstrahl visuell beurteilt wird, nicht sonderlich stört. Bei langen Gelenkarmen kann jedoch der Fall eintreten, daß der Laserstrahl innerhalb der Gelenkoptik aus den freien Öffnungen der Umlenkspiegel oder der Fokusoptik auswandert und auf deren Fassungen trifft. Bei Hochleistungslasern ist damit eine Zerstörung der Optik verbunden.

Zwar ist es bei Lasersystemen zum Auslesen von Informationsspeicherplatten bekannt, Regeleinrichtungen vorzusehen, die den Fokus des Laserstrahls radial einer vorgegebenen Spur nachführen. Diese Regeleinrichtungen werten jedoch die Ablage des Fokus von der sichtbar vorgezeichneten Datenspur aus. Außerdem besteht eine feste räumliche Zuordnung zwischen der Bewegungsrichtung des Stellglieds und der des Laserfokus. Ist der Laserstrahl jedoch über mehrere Drehgelenke geführt, so muß bei der Bestimmung der Zuordnung zwischen den Positionskoordinaten des Fokus und den Stellkoordinaten des nachführenden Elements der Drehwinkel jedes Gelenks berücksichtigt werden. Dies ist jedoch nicht ohne weiteres möglich, denn würde man jedem Gelenk einen eigenen Winkelgeber zuordnen, ergäbe sich insbesondere bei Gelenkarmen mit mehreren Drehachsen ein beträchtlicher zusätzlicher Aufwand.

Aus der JP-A-57-4 393, der JP-A-58-224 088 und der JP-A-57-154 389 sind Regeleinrichtungen für Laserbearbeitungsmaschinen bekannt, durch die ein Auswandern des Laserstrahls aus der Achse der den Strahl führenden Optik verhindert wird. Dort ist zur Erkennung der Strahlposition ein in der Nähe des Ausgangs der Optik angeordneter, positionsempfindlicher Detektor vorgesehen, auf den ein Teil der Laserstrahlung gerichtet ist. Vom Signal des Detektors wird ein der Optik eingangsseitig vorgeschalteter Stellspiegel beaufschlagt.

Der Übertragungsweg für die Laserstrahlung ist bei diesen Einrichtungen starr, so daß auch hier eine feste räumliche Zuordnung zwischen der Bewegungsrichtung des Stellglieds und der ausgangsseitigen Auslenkung des Laserstrahls besteht. Zur Regelung der Strahlposition eines über eine drehbewegliche Gelenkoptik geführten Laserstrahls sind die bekannten Einrichtungen nicht geeignet.

In der nicht vorveröffentlichten EP-A-0 154 865 ist eine Einrichtung zur Lagekorrektur eines über eine Gelenkoptik geführten Laserstrahls beschrieben, in der die Richtung des Laserstrahls von einem eingangsseitig angeordneten Schwingspiegel moduliert wird. Ein Detektor am Ausgang der Gelenkoptik liefert ein Signal auf der Modulationsfrequenz, das die für die Regelung nötige Erkennung der Drehlage der Gelenkoptik ermöglicht. Hier sind aber elektrische Zuleitungen zu dem beweglichen Ende der Gelenkoptik erforderlich. Außerdem ist die Einrichtung wegen der für die Modulation und Demodulation der Strahlrichtung nötigen Teile aufwendig.

Die Aufgabe der vorliegenden Erfindung ist es, eine Gelenkoptik für einen Leistungslaser mit einer Einrichtung zur Lagekorrektur des Laserstrahls zu versehen, die möglichst wenig aufwendig ist und unabhängig von der Winkelstellung der Gelenke arbeitet.

Diese Aufgabe wird durch eine Einrichtung zur Lagekorrektur mit den im Anspruch 1 angegebenen Merkmalen gelöst.

Gemäß der Erfindung wird also am Ausgang der Gelenkoptik ein Tripelspiegel angeordnet, der den auffallenden Teil der Laserstrahlung nochmals durch die Gelenkoptik reflektiert. Da der Laserstrahl bei einem Auswandern aus der Achse der Gelenkoptik nicht mehr die Spitze des Tripelspiegels trifft, erfährt er dort einen seiner Auswanderung proportionalen Versatz und läuft dann parallel zum einfallenden Strahl zurück, wobei er den gleichen Änderungen seiner Drehlage wie der hinlaufende Laserstrahl unterworfen ist. Demzufolge ist der vom positionsempfindlichen Detektor am Eingang der Gelenkoptik gemessene Versatz unabhängig von der Drehlage der Gelenkoptik und kann ohne größeren Aufwand zur Ansteuerung des ebenfalls am Eingang der Gelenkoptik angeordneten Stellglieds elektronisch weiterverarbeitet werden. Deshalb ist immer eine korrekte Nachregelung der Strahlposition trotz der im Gelenkarm auftretenden Drehbewegungen möglich und zwar unabhängig von der Anzahl der verwendeten Drehgelenke, ohne daß die Strahlrichtung moduliert werden müßte.

Der steuerbare Strahlablenker, d. h. das Stellglied für die Regelung der Strahlposition, besteht vorzugsweise aus einem piezoelektrisch auslenkbaren Spiegel.

Wenn koaxial zum Strahl des eigentlichen Arbeitslasers ein Hilfs- oder Pilotlaser eingespiegelt wird, der ohnehin zur visuellen Erkennung des Fokus nötig ist, dann ist es zweckmäßig das retroreflektierende Element und den positionsempfindlichen Detektor im Strahl des Pilotlasers anzuordnen und das Stellglied im gemeinsamen Strahlengang beider Laser vorzu sehen. Als positionsempfindliche Detektoren können vorteilhaft bekannte photoelektrische Quadrantenempfänger verwendet werden.

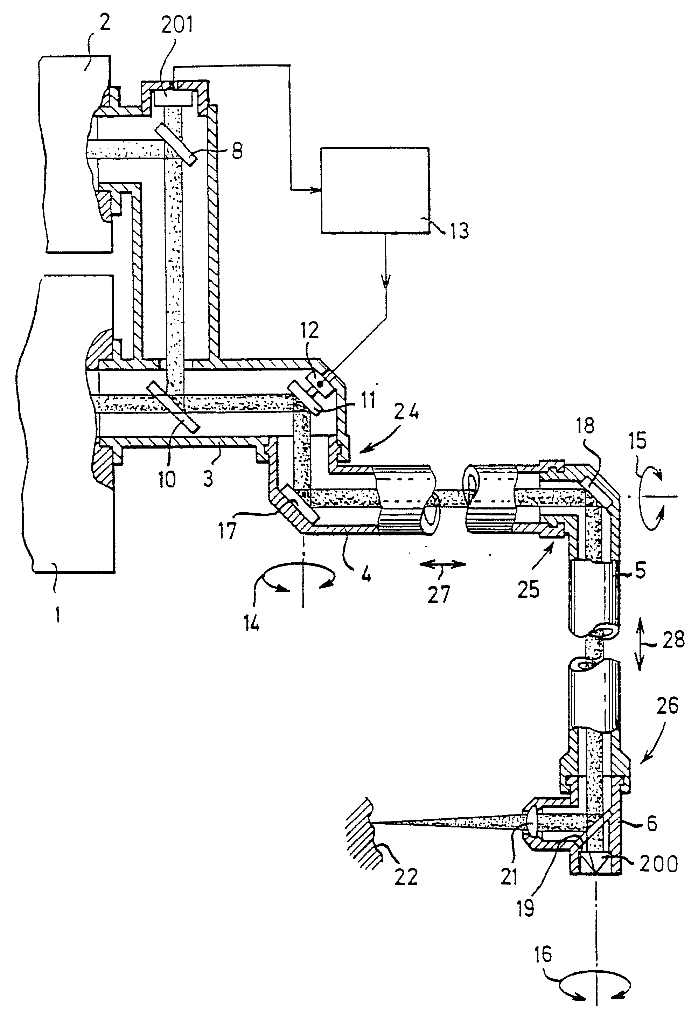

Weitere vorteilhafte Ausgestaltungen der Erfindung ergeben sich aus der nachstehenden Beschreibung der beigefügten Zeichnung, in der ein Ausführungsbeispiel dargestellt ist.

In der Figur der Zeichnung ist mit 1 das Gehäuse eines $CO_2$-Lasers bezeichnet, dessen Strahl über einen Gelenkarm zu einer per Hand in mehreren Freiheitsgraden beweglichen Fokusieroptik 21 geführt ist, mit der der Strahl auf die Oberfläche eines nicht näher spezifizierten Objekts 22 fokussiert wird. Die Gelenkoptik umfaßt ein an das Gehäuse 1 angeflanschtes, feststehendes Rohr 3, an dem ein zweites, teleskopisch ausziehbares Rohr 4 drehbeweglich über ein erstes Drehlager 24 befestigt ist, ein drittes ebenfalls ausziehbares Rohr 5, das seinerseits über ein zweites Drehlager 25 am Teil 4 befestigt ist, und den Schneidkopf 6, der die Fokusieroptik 21 enthält und über ein drittes Drehlager 26 am Teil 5 befestigt ist. Durch die Pfeile 14, 15 und 16 wird die Drehrichtung der Lager 24, 25 und 26 angedeutet, während die Pfeile 27 und 28 den Teleskopauszug der Teile 4 und 5 verdeutlichen sollen.

Die Teile 4, 5 und 6 des Gelenksarms sind hinter dem jeweiligen Drehlager 24, 25 und 26, um das sie mit den auf sie folgenden Teilen jeweils drehbar sind, abgewinkelt und enthalten Umlenkspiegel 17, 18 und 19, über die der Laserstrahl im Gelenkarm geführt ist. Außerdem enthält der gehäusefeste Teil 3 des Gelenkarms einen wellenlängenselektiven Strahlteiler 10, über den koaxial zum Strahl des Arbeitslasers 1 der Strahl eines Pilotlasers 2 in den Gelenkarm eingekoppelt wird. Dieser Pilotlaser 2 dient dazu der Bedienperson, die den Gelenkarm führt, die Position des Fokus des nicht sichtbaren Strahls des Arbeitslasers 1 auf der Oberfläche des Objekts 22 anzuzeigen. Der Spiegel 19, über den der Arbeitslaser 1 in die Fokusieroptik 21 eingespielt wird, ist ebenfalls als Strahlteiler ausgebildet. Er läßt einen Teil der Strahlung des Pilotlasers 2 unreflektiert passieren und damit auf einen dahinter angeordneten Tripelspiegel 200 auffallen.

Der Tripelspiegel 200 reflektiert den einfallenden Teilstrahl des Pilotlasers 2 in sich zurück. Der rückgespiegelte Strahl gelangt über den wellenlängenselektiven Strahlteiler 10 zu einem halbdurchlässigen Spiegel 8 im eingangsseitigen Strahlengang des Pilotlasers 2. Anschließend fällt der durch ihn hindurchtretende Teilstrahl auf einen dahinter angeordneten, positionsempfindlichen Detektor 201.

Verlaufen die Strahlen der Laser 1 und 2 genau zentrisch zur optischen Achse des Gelenkarms, trifft der durch den Teiler 6 hindurchgehende Strahl des Pilotlasers 2 auf die Spitze des Tripelspiegels 200 und wird koaxial in sich reflektiert. Sobald der Strahl jedoch auszuwandern beginnt, beispielsweise, weil sich die Teleskopführungen bei Betätigung des Gelenkarms leicht defomieren oder bedingt durch Schlagfehler in den Drehlagern 24-26, erfährt der am Tripelspiegel 200 reflektierte Strahl gegenüber dem auffallenden Strahl einen Parallelversatz, der betragsmäßig doppelt so groß wie die Auswanderung des auffallenden Strahls aus der Achse der Gelenkoptik ist. Dieser Versatz wird vom Detektor 201 erkannt.

Die photoempfindliche Fläche des Detektors 201 ist in vier gleich große Sektoren aufgeteilt. Die Sektoren dieses Detektors geben Gleichlichtsignale ab, deren Amplituden sich solange nicht voneinander unterscheiden, solange der rücklaufende Strahl zentrisch auf den Detektor 201 auftrifft.

Bei einem Strahlversatz ändern sich die Amplitudenverhältnisse der Gleichlichtsignale der vier Quadranten. Diese Änderung ist der Auswanderung des über den Gelenkarm geführten Laserstrahls aus der Achse der Gelenkoptik proportional. Eine elektronische Schaltung 13 wertet die Gleichlichtsignale aus und liefert ein Stellsignal für einen am Eingang des Gelenkarms angeordneten Stellspiegel 11. Mit der Auslenkung des Stellspiegels 11 wird die Auswanderung der über ihn geführten Strahlen des $CO_2$-Lasers und des Pilotlasers 2 kompensiert.

Der Stellspiegel 11 ist über Piezoelemente 12 am gehäusefesten Teil 13 befestigt. Es ist jedoch klar, daß die Auslenkung des Spiegels 11 auch über z. B. induktive Stellglieder erfolgen kann, wesentlich ist lediglich, daß die Verstellbarkeit des Spiegels 11 in zwei Koordinaten gewährleistet ist. Ausführungsbeispiele für piezoelektrisch arbeitende Stellspiegel sind u. a. in der DE-PS 29 50 919 beschrieben.

Da der vom Tripelspiegel 200 reflektierte Teilstrahl des Pilotlasers 2 über die gleichen optischen Elemente, d. h. Spiegel 10, 11, 17, 18 zurückgeführt ist wie der auf den Tripelspiegel 200 auffallende Strahl, bleibt die azimutale Zuordnung zwischen dem vom Detektor 201 gemessenen Versatz und der Richtung der Nachstellbewegung am Stellspiegel 11 erhalten, unabhängig von der Drehlage der Teile 4, 5 und 6 des Gelenkarms. Eine separate Einrichtung zur Ermittlung der Drehlage des Gelenkarms ist deshalb nicht erforderlich.

## Patentansprüche

1. Einrichtung zur Lagekorrektur eines über eine Gelenkoptik geführten Laserstrahls, mit :

einem am Eingang der Gelenkoptik angeordneten, steuerbaren Strahlablenker (11, 12),

einem in der Nähe des Ausganges in der Gelenkoptik angeordneten . retroreflektierenden Element (Tripelspiegel 200), das den auftreffenden Teil der Laserstrahlung nochmals durch die Gelenkoptik in Richtung auf den Eingang zurückreflektiert,

einem positionsempfindlichen Detektor (201), der eingangsseitig in der Gelenkoptik so angebracht ist, daß er den rückreflektierten Teil der Strahlung empfängt, und

einer Schaltung (13), der das Signal des Detektors (201) zugeführt ist und die daraus ein Regelsignal für die Steuerung des Strahlablenkers bildet.

2. Einrichtung nach Anspruch 1, dadurch gekennzeichnet, daß sich das retroreflektierende Element (200) und der Detektor (201) im Strahlengang eines Hilfslasers (2) befinden, der in den Strahl eines Arbeitslasers (1) eingekoppelt ist, und daß beide Laserstrahlen über den steuerbaren Strahlablenker (11, 12) geführt sind.

3. Einrichtung nach Anspruch 1, dadurch gekennzeichnet, daß der positionsempfindliche Detektor ein Quadrantenempfänger ist.

4. Einrichtung nach Anspruch 1-3, dadurch gekennzeichnet, daß der steuerbare Strahlablenker ein piezoelektrisch auslenkbarer Stellspiegel ist.

## Claims

1. An arrangement for correcting the position of a laser beam guided by means of an articulated optical system, the arrangement comprising :

an adjustable beam reflector (11, 12) arranged at the input end of said articulated optical system ;

a retroreflecting element (triple mirror 200) mounted in the region of the output end of said articulated optical system for reflecting the impinging part of the laser beam back through said articulated optical system to the input end thereof ;

a position-sensitive detector (201) arranged at the input end of said articulated optical system for receiving said reflected part of the beam ; and

a control unit (13) for receiving the signal of said detector (201) and for generating a control signal for controlling said beam deflector.

2. The arrangement of claim 1, characterized by the fact that the retroreflecting element and the detector (201) both are mounted in the beam path of a pilot laser (2) which is coupled into the beam of the work laser (1) ; and that both laser beams are guided via said adjustable beam deflector.

3. The arrangement of claim 1, characterized in that the position-sensitive detector is a quadrant receiver.

4. The arrangement of claim 1, characterized in that the adjustable beam deflector is a piezoelectric tiltable adjusting mirror.

## Revendications

1. Dispositif pour corriger la position d'un rayon laser guidé par une optique articulée, comprenant :

un déviateur de rayon (11, 12) commandé, disposé à l'entrée de l'optique articulée,

un élément rétro-réfléchissant (miroir triple 200) disposé à proximité de la sortie de l'optique articulée, qui réfléchit en sens inverse la partie incidente du rayonnement laser pour faire passer cette partie une nouvelle fois à travers l'optique articulée en direction de l'entrée,

un détecteur (201) a sensibilité de position, qui est disposé côté entrée dans l'optique articulée, de manière qu'il reçoive la partie rétro-réfléchie du rayonnement, et

un circuit (13) auquel est appliqué le signal du détecteur (201) et qui forme à partir de lui un signal de réglage pour la commande du déviateur de rayon.

2. Dispositif selon la revendication 1, caractérisé en ce que l'élément rétro-réfléchissant (200) et le détecteur (201) se trouvent dans la marche du rayon d'un laser auxiliaire (2) qui est introduit dans le rayon d'un laser de travail (1), et que les deux rayons lasers sont guidés par le déviateur de rayon commandé (11, 12).

3. Dispositif selon la revendication 1, caractérisé en ce que le détecteur à sensibilité de position est un récepteur à quadrants.

4. Dispositif selon les revendications 1-3, caractérisé en ce que le déviateur de rayon commandé est un miroir d'ajustement orientable par voie piézo-électrique.